# EUROPEAN PATENT APPLICATION

(11) **EP 2 441 358 A1**
(43) Date of publication of application: **18.04.2012**
(21) Application number: 11163155.2
(22) Date of filing: 20.04.2011
(51) Int. Cl.: A47J 19/02, A47J 43/07

(54) **Machine for cutting and grinding fruits, vegetables and foods**

(30) Priority: 18.10.2010 TW 099220095; 15.12.2010 TW 099224335
(71) Applicant: Lin, Wei-Chih, New Taipei City 220 (TW)
(72) Inventor: Lin, Wei-Chih, New Taipei City 220 (TW)
(74) Representative: Becker Kurig Straus

(57) **Abstract**

A machine for cutting and grinding fruits, vegetables and foods includes a frame, an operating motor is disposed in the frame, and a cutting and grinding component is disposed above the frame. The cutting and grinding component includes an adapter, in which, an openable and closable juice outlet is disposed at a side of the adapter, a container is located above the adapter, a space is formed between the top of the adapter and the bottom of the container, and the space is in communication with the juice outlet. In addition, a cutting tool, a first abrasive disc and a second abrasive disc are sequentially disposed between the bottom of the container and the top of the adapter from top to bottom, and the cutting tool, the second abrasive disc and a spindle are coaxially connected. Thereby, when the operating motor operates, the cutting tool cuts the fruits, vegetables and foods in the container, and the first abrasive disc and the second abrasive disc grind the cut fruits, vegetables and foods, and then juice flows out from the juice outlet after grinding.

## Description

### Field of Invention

The present invention relates to a machine for cutting and grinding fruits, vegetables and foods, and more particularly to a machine with the advantages of convenient assembly and disassembly, power saving and low noise, and having dual functions of cutting and grinding.

### Related Art

With the progress of the times, and particularly with the development of industry and commerce, lands are excessively developed, worries of people become more and more, while body activities become less and less, and thus people gradually feel that physical functions degenerate and the health is threatened. Therefore, people not only deeply realize the importance of exercises, but also the health requirements on diet become higher and higher.

Since nutrition balance of various aspects is very important in drinking and eating, various kinds of conditioning machines for conditioning vegetables, fruits, and bean foods exist currently to mince and juice the fruits, vegetables and foods, so that people fast acquire nutrition supplement. However, a principle of a common conditioning machine is that, after a carbon brush motor fast revolves, the foods are minced and blended through a cutter. Such manner not only has deficiencies of high power consumption and loud noise during fast cutting, but also nutritive values of the foods are lost since nutrients of the foods are oxidized quickly after the fast cutting. Moreover, cellulose, peels and seeds of the foods are hard to be resolved into water-soluble cellulose for being swallowed and absorbed by human body even if they are minced. Therefore, the conditioning machine of such kind is undesirable.

If a revolving speed of the motor of the foregoing conditioning machine is reduced, although the foregoing problems may be solved, the fruits, vegetables and foods are hard to be fully minced. Therefore, a conditioning machine using vertically-opposite abrasive discs arises, which grinds the fruits, vegetables and foods at a low speed. However, if the fruits, vegetables and foods are processed merely in a grinding manner, the efficiency thereof is undesirable, and the combination components of the conditioning machine of such kind are complicated and numerous, and moreover, the conditioning machine needs to be disassembled for washing after using, thus bringing much inconvenience for use and wasting the time.

In view of this, in order to eliminate the foregoing deficiencies, a structure different from the conventional conditioning machine is provided, so that a machine for cutting and grinding the fruits, vegetables and foods not only has simple components and is convenient for use, but also has dual functions of cutting and grinding at the low speed, the present invention arises through years of experience and continuous research, development and improvement of the inventor.

### SUMMARY OF THE INVENTION

The primary object of the present invention is to provide a machine for cutting and grinding fruits, vegetables and foods, which sequentially cuts and grinds the fruits, vegetables and foods through a structure of a spindle of an operating motor, a second abrasive disc and a cutting tool which are coaxially-disposed when the operating motor operates.

Another object of the present invention is to provide a machine for cutting and grinding fruits, vegetables and foods, which effectively reserves nutrition of the foods and reduces the noise through a structure in which an induction servo motor slowly drives the spindle to revolve, and a cutting tool, a first abrasive disc and a second abrasive disc are used to cut and grind.

Another object of the present invention is to provide a machine for cutting and grinding fruits, vegetables, and foods, which selectively cuts the fruits, vegetables and foods or grounds them after cutting when a flow control valve is opened or closed through a structure in which the flow control valve is disposed on the bottom of a cutting and grinding component.

To achieve the above objectives, the machine for cutting and grinding fruits, vegetables and foods according to the present invention includes a frame and a cutting and grinding component. An operating motor is disposed in the frame, and a spindle is disposed in the operating motor. The cutting and grinding component is disposed above the frame, and includes an adapter and a container. An openable and closable juice outlet is disposed at a side of the adapter, the container is located above the adapter, a space is formed between the top of the adapter and the bottom of the container, and the space is in communication with the juice outlet. A cutting tool, a first abrasive disc and a second abrasive disc are sequentially disposed between the bottom of the container and the top of the adapter from top to bottom, and the cutting tool, the second abrasive disc and the spindle are coaxially connected. Therefore, when the operating motor operates, the spindle, the second abrasive disc and the cutting tool synchronously revolve, so as to cut the fruits, vegetables and foods in the container, and grind the cut fruits, vegetables and foods through the first abrasive disc and the second abrasive disc, and then juice flows out from the juice outlet after grinding.

In practice, the first abrasive disc is in a ring shape, and is fixed on the bottom of the container. A plurality of lower grinding teeth is disposed on a ring-shaped bottom surface of the first abrasive disc, and a plurality of upper grinding teeth is disposed on the top surface of the second abrasive disc relative to the lower grinding teeth.

In practice, a flow control valve is disposed on a side of the adapter for controlling the opening or closing of the juice outlet.

In practice, the operating motor is an induction servo motor.

In order to make the present invention more comprehensible, the specific contents of the present invention are described in detail in the following.

Other objects, advantages and novel features of the present invention will become more apparent from the following detailed description when taken in conjunction with the accompanying drawings.

### BRIEF DESCRIPTION OF THE DRAWINGS

FIG. 1 is a sectional view of a combination according to a preferred embodiment of the present invention;
FIG. 2 is an exploded view of components according to a preferred embodiment of the present invention;
FIG. 3 is an outside perspective view of a first abrasive disc according to the present invention;
FIG. 4 is a view of a using state according to the present invention; and
FIG. 5 is a sectional view of a combination of a first abrasive disc and a second abrasive disc according to another embodiment of the present invention.

### DETAILED DESCRIPTION OF THE INVENTION

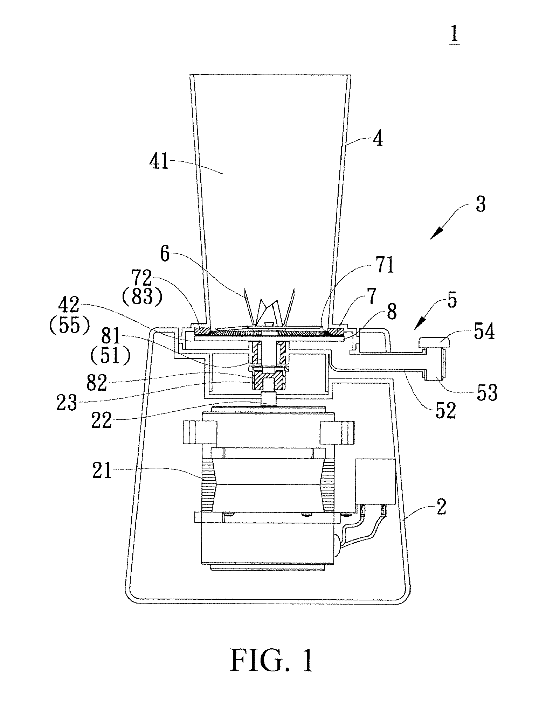

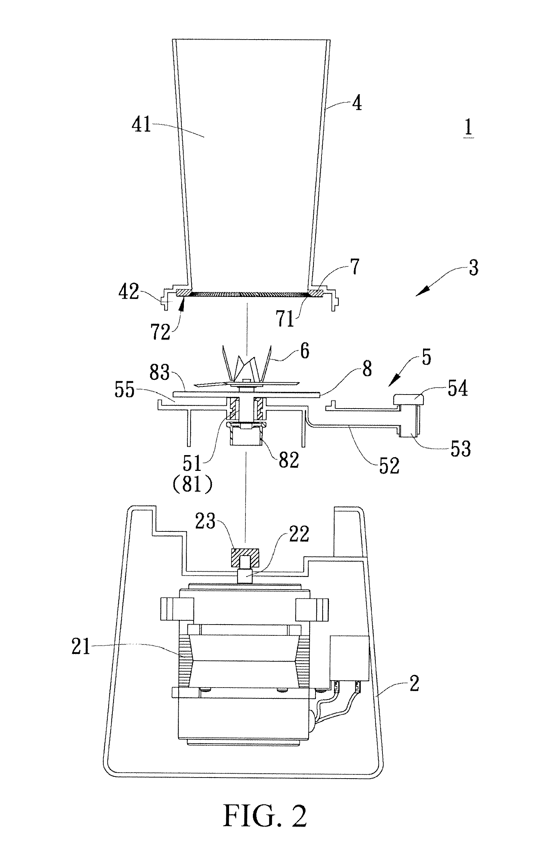

FIGs. 1 and 2 illustrate a preferred embodiment of a machine 1 for cutting and grinding fruits, vegetables and foods of the present invention, which includes a frame 2 and a cutting and grinding component 3.

The frame 2 is slightly in a cylinder shape, and an operating motor 21 is disposed in the frame, in which, a spindle 22 is disposed in the operating motor 21, the top of the spindle 22 upwardly projects from the top of the operating motor 21, and the top of the spindle 22 is connected to an adaptive piece 23. In the implementation, the operating motor 21 is preferably an induction servo motor without a carbon brush, so as to drive the spindle 22 to slowly revolve.

The cutting and grinding component 3 is disposed above the frame 2, and includes a container 4, an adapter 5, a cutting tool 6, a first abrasive disc 7 and a second abrasive disc 8. The container 4 is located above the adapter 5, a space 41 for accommodating the fruits, vegetables and foods is formed in the container 4, a groove 42 upwardly hollowing is disposed on the bottom of the container 4, and the groove 42 and the space 41 in the container 4 are in communication up and down.

A through shaft bore 51 is disposed on the adapter 5, a tube 52 is disposed on a side of the adapter 5, a juice outlet 53 is formed on an end of the tube 52, and the juice outlet 53 is controlled by a flow control valve 54 to enable the juice outlet 53 to be opened or closed. A containing groove 55 is disposed on the top of the adapter 5, hollows downward from the top of the adapter 5, and is in communication with the juice outlet 53 through the tube 52. The shape of the containing groove 55 corresponds to the groove 42 on the bottom of the container 4, so that the containing groove 55 and the groove 42 are merged into a space when the container 4 is located above the adapter 5.

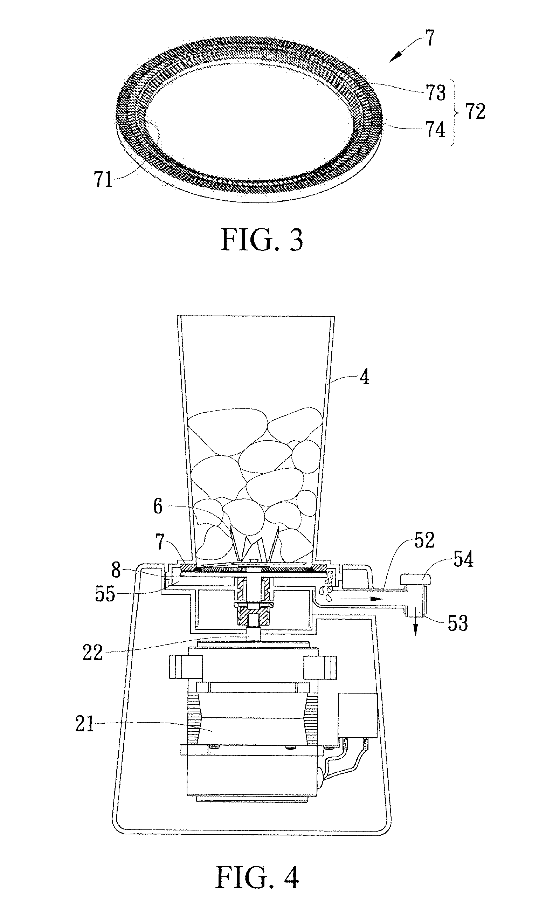

The cutting tool 6, the first abrasive disc 7 and the second abrasive disc 8 are sequentially located between the containing groove 55 on the top of the adapter 5 and the bottom of the container 4 from top to bottom, and the cutting tool 6, the first abrasive disc 7 and the second abrasive disc 8 are located on the same axle center. As shown in FIGs. 2 and 3, the first abrasive disc 7 is fixed in the groove 42 on the bottom of the container 4, and the first abrasive disc 7 is in a ring shape, in which an inner ring surface of the innermost ring of the first abrasive disc 7 is in a narrow-end-up cone shape, in which a plurality of teeth is disposed on an inner wall of the cone shape and the plurality of teeth is used as a blocking layer 71. In the implementation, the blocking layer 71 may also be formed of a plurality of convex granules. A plurality of lower grinding teeth 72 is disposed on a ring-shaped bottom surface of the first abrasive disc 7. In this embodiment, an inner ring-shaped surface and an outer ring-shaped surface spreading from inside to outside in a ring shape are disposed on the ring-shaped bottom surface of the first abrasive disc 7, in which a plurality of inner grinding teeth 73 is disposed on the inner ring-shaped surface, a plurality of outer grinding teeth 74 is disposed on the outer ring-shaped surface, and the inner grinding teeth 73 and the outer grinding teeth 74 are jointly set to be the lower grinding teeth 72. In the implementation, a plurality of lower grinding teeth 72 with the same shape may also be disposed on the ring-shaped bottom surface of the first abrasive disc 7, or more than two ring-shaped surfaces are disposed, and a plurality of lower grinding teeth 72 with different shapes are disposed on the ring-shaped surfaces respectively.

As shown in FIGs. 1 and 2, the second abrasive disc 8 is a disc, a shaft rod 81 extending downward is disposed on the bottom thereof, and the shaft rod 81 penetrates downward the shaft bore 51 of the adapter 5, so that the second abrasive disc 8 is located on the top of the adapter 5, and the bottom of the shaft rod 81 is connected to a sleeve 82, in which the sleeve 82 is sleeved over the adaptive piece 23, so that the shaft rod 81 revolves in synchronism with the spindle 22 of the operating motor 21. In the implementation, a mutually fastening structure may also be disposed in the sleeve 82 and out of the adaptive piece 23 respectively, and likewise, the shaft rod 81 may be separate from or connected to the spindle 22 of the operating motor 21. In addition, a plurality of upper grinding teeth 83 relative to the plurality of lower grinding teeth 72 is disposed on the top of the second abrasive disc 8. The cutting tool 6 is fixed above the center of the top surface of the second abrasive disc 8, and is accommodated on the bottom of the space 41 in the container 4.

Thereby, as shown in FIG. 4, as for the fruits, vegetables and foods capable of being directly drunk after cutting, when the flow control valve 54 is closed, and the fruits, vegetables and foods are contained in the container 4, and meanwhile the operating motor 21 is started, so that the operating motor 21 begins to operate, the spindle 22 of the operating motor 21, the second abrasive disc 8 and the cutting tool 6 synchronously revolve, and the cutting tool 6 cuts the fruits, vegetables and foods in the container 4, and after the cutting, the juice is directly poured out and drunk. At this time, since some liquid may be usually poured into the container 4 for the ease of cutting when cutting the fruits, vegetables and foods, the liquid may be filled in the containing groove 55 and the tube 52, and the fruits, vegetables and foods are retained in the container 4 for being cut by the cutting tool 6. As for beans required to be ground for being weensy or other fruit-kind foods required to be ground for obtaining nutrition, when the flow control valve 54 is closed, the cutting is first performed, and after the flow control valve 54 is switched on, the juice having coarse granules or cellulose after cutting flows downwards through the action of gravity, and then, is ground by the first abrasive disc 7 and the second abrasive disc 8, so that the juice of the fruits, vegetables and foods after grinding flows outwards from the juice outlet 53.

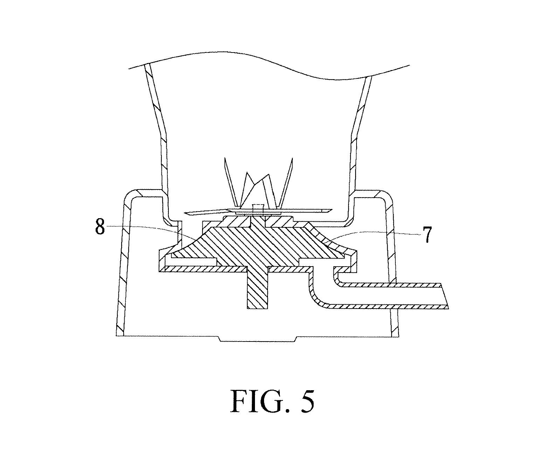

In addition, as shown in FIG. 5, the inner ring surface of the first abrasive disc 7 may also be a cone-shaped surface, inner grinding teeth are disposed on the cone-shaped surface, the outer ring surface of the second abrasive disc 8 may also be a cone-shaped surface corresponding to the inner ring surface of the first abrasive disc 7, and outer grinding teeth are disposed on the outer ring surface. Thereby, likewise, the juice having coarse granules or cellulose may be ground after the juice flows downwards.

Therefore, the present invention has the following advantages.
1. The spindle of the operating motor, the second abrasive disc and the cutting tool of the present invention may slowly and synchronously revolve, and therefore, the cellulose, peels, and seeds of the fruits, vegetables and foods may be sequentially cut and ground to be resolved into water-soluble cellulose, so as to save the nutrition of the foods for not being oxidized.
2. The action of the gravity is used in the present invention, the components after using are washed through the clean water, and therefore, the time of disassembling for washing may be effectively saved.
3. The container and the cutting and grinding component of the present invention may be connected to or separate from the spindle of the operating motor, and therefore, the structure is rather simple, and the use is easy.
4. The spindle of the operating motor, the second abrasive disc and the cutting tool of the present invention are driven by the slow induction servo motor, the power consumption of the induction servo motor is about 80 W∼250 W, and the service life thereof is about 20, 000 hours, while when the conventional carbon brush motor operates fast, the power consumption thereof is about 800 W∼1000 W, and the service life thereof is about 500 hours. Therefore, according to the present invention, not only the energy is saved, the waste of the energy is prevented, and the service life is prolonged, but also the noise is effectively reduced due to the reduction of the revolving speed.
5. According to the present invention, common fruits, vegetables and foods may be selected for cutting, or the beans are ground after cutting for a period of time, and therefore, the use is rather flexible.

To sum up, according to the content of the foregoing description, the expected goal actually may be achieved through the present invention. The machine for cutting and grinding fruits, vegetables and foods not only has simple components and is convenient for use, capable of saving the energy and reducing the noise, but also has dual functions of slow cutting and grinding, so the machine is rather practical. Therefore, the patent of the present invention is applied according to the laws.

While the present invention has been described with reference to the embodiments and technical means thereof, various changes and modifications can be made based on the disclosure or teachings described herein. Any equivalent changes made based on the concepts of the present invention having their effect without departing from the spirit encompassed by the specification and drawings should be construed as falling within the scope of the invention as defined by the appended claims.

It should be understood that different modifications and variations could be made from the disclosures of the present invention by the people familiar in the art without departing the spirit of the present invention.

## Claims

1. A machine for cutting and grinding fruits, vegetables and foods, comprising:
a frame, in which an operating motor is disposed, wherein a spindle is disposed in the operating motor; and
a cutting and grinding component, disposed above the frame, and comprising an adapter and a container, wherein an openable and closable juice outlet is disposed at a side of the adapter, the container is located above the adapter, a space is formed between the top of the adapter and the bottom of the container, the space is in communication with the juice outlet, a cutting tool, a first abrasive disc and a second abrasive disc are sequentially disposed between the bottom of the container and the top of the adapter from top to bottom, and the cutting tool, the second abrasive disc and the spindle are coaxially connected, and therefore, when the operating motor operates, the spindle, the second abrasive disc and the cutting tool synchronously revolve, so as to cut the fruits, vegetables and foods in the container, and grind the cut fruits, vegetables and foods through the first abrasive disc and the second abrasive disc.

2. The machine for cutting and grinding the fruits, vegetables, and foods according to claim 1, wherein the first abrasive disc is in a ring shape and is fixed on the bottom of the container, a plurality of lower grinding teeth is disposed on a ring-shaped bottom surface of the first abrasive disc, and a plurality of upper grinding teeth corresponding to the plurality of lower grinding teeth is disposed on a top surface of the second abrasive disc.

3. The machine for cutting and grinding the fruits, vegetables, and foods according to claim 2, wherein an inner ring surface of the first abrasive disc is in a cone shape, and a blocking layer is disposed on an inner wall of the cone shape.

4. The machine for cutting and grinding the fruits, vegetables, and foods according to claims 2, wherein a flow control valve is disposed on a side of the adapter for controlling the opening or the closing of the juice outlet.

5. The machine for cutting and grinding the fruits, vegetables, and foods according to claim 4, further comprising: an adaptive piece, wherein a lower end of the adaptive piece is connected to the top of the spindle, and an upper end of the adaptive piece is coaxially connected to the bottom of the second abrasive disc.

6. The machine for cutting and grinding the fruits, vegetables, and foods according to claim 4, wherein the operating motor is an induction servo motor.

7. The machine for cutting and grinding the fruits, vegetables, and foods according to claims 3, wherein a flow control valve is disposed on a side of the adapter for controlling the opening or the closing of the juice outlet.

8. The machine for cutting and grinding the fruits, vegetables, and foods according to claim 7, further comprising: an adaptive piece, wherein a lower end of the adaptive piece is connected to the top of the spindle, and an upper end of the adaptive piece is coaxially connected to the bottom of the second abrasive disc.

9. The machine for cutting and grinding the fruits, vegetables, and foods according to claim 7, wherein the operating motor is an induction servo motor.

10. The machine for cutting and grinding the fruits, vegetables, and foods according to claims 4, wherein a flow control valve is disposed on a side of the adapter for controlling the opening or the closing of the juice outlet.

11. The machine for cutting and grinding the fruits, vegetables, and foods according to claim 10, further comprising: an adaptive piece, wherein a lower end of the adaptive piece is connected to the top of the spindle, and an upper end of the adaptive piece is coaxially connected to the bottom of the second abrasive disc.

12. The machine for cutting and grinding the fruits, vegetables, and foods according to claim 10, wherein the operating motor is an induction servo motor.

13. The machine for cutting and grinding the fruits, vegetables, and foods according to claim 1, wherein an inner ring surface of the first abrasive disc is a cone-shaped surface, and an outer ring surface of the second abrasive disc is a cone-shaped surface corresponding to the inner ring surface of the first abrasive disc.

## Amended claims

### Amended claims in accordance with Rule 137(2) EPC.

**1.** A machine (1) for cutting and grinding fruits, vegetables and foods, comprising:
a frame (2), in which an operating motor (21) is disposed, wherein a spindle (22) is disposed in the operating motor (21); and
a cutting and grinding component (3) that is disposed above the frame (2), and is **characterized in that**:
the cutting and grinding component (3) comprising an adapter (5) and a container (4), wherein an openable and closable juice outlet (53) is disposed at a side of the adapter (5), the container (4) is located above the adapter (5), a space (41) is formed between the top of the adapter (5) and the bottom of the container (4), and the space (41) is in communication with the juice outlet (53); and a cutting tool (6), a first abrasive disc (7) and a second abrasive disc (8) are sequentially disposed between the bottom of the container (4) and the top of the adapter (5) from top to bottom; and the cutting tool (6), the second abrasive disc (8) and the spindle (22) are coaxially connected; and therefore, when the operating motor (21) operates, the spindle (22), the second abrasive disc (8) and the cutting tool (6) synchronously revolve, so as to cut the fruits, vegetables and foods in the container (4), and grind the cut fruits, vegetables and foods through the first abrasive disc (7) and the second abrasive disc (8).

**2.** The machine (1) for cutting and grinding the fruits, vegetables, and foods according to claim 1, wherein the first abrasive disc (7) is in a ring shape and is fixed on the bottom of the container (4), a plurality of lower grinding teeth (72) is disposed on a ring-shaped bottom surface of the first abrasive disc (7), and a plurality of upper grinding teeth corresponding to the plurality of lower grinding teeth (72) is disposed on a top surface of the second abrasive disc (8).

**3.** The machine (1) for cutting and grinding the fruits, vegetables, and foods according to claim 2, wherein an inner ring surface of the first abrasive disc (7) is in a cone shape, and a blocking layer (71) is disposed on an inner wall of the cone shape.

**4.** The machine (1) for cutting and grinding the fruits, vegetables, and foods according to claims 2, wherein a flow control valve (54) is disposed on a side of the adapter (5) for controlling the opening or the closing of the juice outlet (53).

**5.** The machine (1) for cutting and grinding the fruits, vegetables, and foods according to claim 4, further comprising: an adaptive piece (23), wherein a lower end of the adaptive piece (23) is connected to the top of the spindle (22), and an upper end of the adaptive piece (23) is coaxially connected to the bottom of the second abrasive disc (8).

**6.** The machine (1) for cutting and grinding the fruits, vegetables, and foods according to claim 4, wherein the operating motor (21) is an induction servo motor.

**7.** The machine (1) for cutting and grinding the fruits, vegetables, and foods according to claims 3, wherein a flow control valve (54) is disposed on a side of the adapter (4) for controlling the opening or the closing of the juice outlet (53).

**8.** The machine (1) for cutting and grinding the fruits, vegetables, and foods according to claim 7, further comprising: an adaptive piece (23), wherein a lower end of the adaptive piece (23) is connected to the top of the spindle (22), and an upper end of the adaptive piece (23) is coaxially connected to the bottom of the second abrasive disc (8).

**9.** The machine (1) for cutting and grinding the fruits, vegetables, and foods according to claim 7, wherein the operating motor (21) is an induction servo motor.

**10.** The machine (1) for cutting and grinding the fruits, vegetables, and foods according to claims 4, wherein a flow control valve (54) is disposed on a side of the adapter (4) for controlling the opening or the closing of the juice outlet (53).

**11.** The machine (1) for cutting and grinding the fruits, vegetables, and foods according to claim 10, further comprising: an adaptive piece (23), wherein a lower end of the adaptive (23) piece is connected to the top of the spindle (22), and an upper end of the adaptive piece (23) is coaxially connected to the bottom of the second abrasive disc (8).

**12.** The machine (1) for cutting and grinding the fruits, vegetables, and foods according to claim 10, wherein the operating motor (21) is an induction servo motor.

**13.** The machine (1) for cutting and grinding the fruits, vegetables, and foods according to claim 1, wherein an inner ring surface of the first abrasive disc (7) is a cone-shaped surface, and an outer ring surface of the second abrasive disc (8) is a cone-shaped surface corresponding to the inner ring surface of the first abrasive disc (7).
